(19) **Europäisches Patentamt / European Patent Office / Office européen des brevets**

(11) **EP 4 080 429 A1**

(12) **EUROPEAN PATENT APPLICATION**
published in accordance with Art. 153(4) EPC

(43) Date of publication:
26.10.2022 Bulletin 2022/43

(51) International Patent Classification (IPC):
**G06Q 10/06** (2012.01)    **G06F 16/2458** (2019.01)

(21) Application number: **20904895.8**

(22) Date of filing: **20.01.2020**

(86) International application number:
**PCT/CN2020/073118**

(87) International publication number:
**WO 2021/128523 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2019 CN 201911375474**

(71) Applicant: **Beijing Benying Technologies Co., Ltd Beijing 100080 (CN)**

(72) Inventors:
• **HAN, Lijuan Beijing 100080 (CN)**
• **LIU, Chang Beijing 100080 (CN)**

(74) Representative: **Bayramoglu et al. Mira Office Kanuni Sultan Süleyman Boulevard 5387 Street Beytepe, floor 12, no:50 06800 Cankaya, Ankara (TR)**

(54) **TECHNOLOGY READINESS LEVEL DETERMINATION METHOD AND SYSTEM BASED ON SCIENCE AND TECHNOLOGY BIG DATA**

(57)    The present invention provides a technology maturity judgment method and system based on science and technology big data. The method comprises establishing a database, an algorithm library and an index library, and further comprises the following steps: performing data retrieval in the database; performing data calculation and organization on a retrieval result; performing regression calculation on organized data to obtain a technical maturity index; obtaining a judgment conclusion according to the technical maturity index. The present invention is mainly based on the patent analysis method, and assisted by technical big data analysis of papers, projects and the like, technical points are placed in a technology cluster associated with the technology to perform comprehensive analysis by multi-dimensional evaluation indexes and algorithm. Mapping between science and technology big data indexes and technology maturity is established, automatic judgment is achieved, and the method is different from a traditional expert review method.

100 establishing a database, an algorithm library and an index library

110 performing data retrieval in the database

120 performing data calculation and organization

130 performing regression calculation to obtain technical maturity indexes

140 obtaining a judgment conclusion corresponding to the technical maturity index

FIG. 1

EP 4 080 429 A1

**Description**

**TECHNICAL FIELD**

The invention relates to the technical field of document analysis, in particular to a technology maturity judgment method and system based on science and technology big data.

**BACKGROUND**

The technology maturity is a summary of mature rules of technology on a basis of a large amount of engineering practice. In order to enhance management capability of scientific decisions of science and technology engineering projects, improve technical level of scientific research teams in dealing with technical risks, and effectively control technical risks of engineering, technology maturity evaluation work is carried out simultaneously in development processes of science and technology engineering projects. Through the technology maturity evaluation, a technology maturity level of a key technology is objectively evaluated, a research and development state of the key technology is accurately mastered, problems and gaps existing are comprehensively analyzed, and guiding effects on engineering development is expected to be enhanced. The technology maturity can not only guide to make a technical development route according to technology maturity rules, arrange scientific research activities scientifically and reasonably, but also evaluate a satisfaction degree of a current technology development state to an expected target of the project, and can also be used as an exit criterion for technical transfer and a technical risk management tool. Through technology maturity evaluation, the development state of the current technology and differences between a current technical state and a target state are accurately recognized, and a foundation is provided for formulating a technical mature plan.
At present, the technology maturity evaluation methods mainly comprise the following three types.

(1) Expert review method, this method is commonly used, but accuracy of this method is greatly dependent on subjective judgment of experts, and is greatly influenced by expert knowledge levels, emotions and subjective impressions, this method is ambiguous in evaluation, is easily effected by department benefits or personal prejudice, is lack of standardize and objective evaluation standards, and is difficult to effectively support decision-making.
(2) Patent analysis method, this method emphasizes analyses of the number and quality of patents, a representation of this method is a patent analysis model based on the TRIZ theory ( Theory of the Solution of Inventive Problems ) of Altshuler, the TRIZ theory divides a technical life cycle into four stages which are a germination stage, a growth stage, a mature stage and a decline stage. A relationship of technical performance and time in these four stages is presented as a " S " curve, and this method mainly describes features of each stage of technology from four aspects of the patent number, patent level, performance, and economic benefit. Firstly, patent information is statistically analyzed based on a time axis, and then a obtained S curve of the current technology is compared with a standard S curve, so as to judge the development stage of the life cycle of the technology. The TRIZ theory also includes a technology maturity evaluation model based on patent benefit and patent innovation degree, however, it has been found in practice that: the patent benefit is affected by various factors such as social and economic environments, enterprise operation levels and the like, which is difficult to accurately reflect the technology maturity, and the patent innovation degree is usually subjectively judged by experts who read patent documents, which has a large workload, and is difficult to be objective and accurate.
(3) Technology Readiness Levels ( TRL ), TRL is a systematic technology maturity evaluation standard, and is proposed by the National Aeronautics and Space Administration (NASA) in 1995 and applied in the aerospace field, and then is adopted by the Department of Defense of US and UKs. TRL divides the maturity of technology into nine levels according to the process of technology development: TRL 1 ~ TRL 9. This method needs to comprehensively investigate all activities of the technology and comprehensively judge the technology maturity from three attributes of technology status, technology integration in a system and environments for demonstration or verification. It requires a lot of expert on-site investigation and research, which is subjective. In addition, this method generally describes how the technology is mature. Because the definition of TRL should reflect its universality and cannot reflect its specificity, an evaluation checklist is difficult to adapt to various types of attribute changes, and it is difficult to clearly distinguish the criteria at all levels.

An invention patent with publication No. CN105184078A discloses a technology maturity evaluation method based on patent relative amount analysis. Through statistics of an absolute growth amount of patents of the technology to be analyzed, and a correction of the absolute growth amount based on growth times of the total patent and the patent quality levels, a relative growth amount of patents is obtained, curve fitting is carried out of a normalized relative growth amount of patent based on the year, and a fitting curve and a standard patent growth amount curve are compared, then the current technology maturity is determined. The invention comprises the following steps: (a) retrieving and counting the absolute growth amount of patents of a to-be-analyzed technology; (b) calculating the relative growth amount of patents of the to-be-analyzed technology; (c) normalizing the relative growth amount of patents; and (d) performing curve fitting of the normalized relative growth amount. The disadvantage of this method is that the patent quality judgment is too simple.

**SUMMARY**

In order to solve the technical problems above, the present invention provides a technology maturity judgment method and system based on science and technology big data. It is mainly based on the patent analysis method, and assisted by technical big data analysis of papers, projects and the like, technical points are placed in a technology cluster associated with the technology to perform comprehensive analysis by multi-dimensional evaluation indexes and algorithm. Mapping between science and technology big data indexes and technology maturity is established, automatic judgment is achieved, and the method is different from a traditional expert review method and the like which need a large amount of artificial subjective work, and the method is more objective and authentic.

A first object of the present invention is to provide a technology maturity judgment method based on science and technology big data, the method comprises establishing a database, an algorithm library and an index library, and further comprises the following steps:

    step 1: performing data retrieval in the database;
    step 2: performing data calculation and organization on a retrieval result;
    step 3: performing regression calculation on organized data to obtain a technical maturity index;
    step 4: obtaining a judgment conclusion according to the technical maturity index.

Preferably, the database is a multi-dimensional science and technology database, and the multi-dimensional science and technology database comprises at least one of a patent library, a paper library, a project library and a news library.

In any of the above solutions, it is preferred that the algorithm library includes a science and technology knowledge graph and/or a technical cluster, and the science and technology knowledge graph and/or the technology cluster is used for defining technical points, technology clusters and related technical content thereof.

In any of the above solutions, it is preferred that indexes in the index library include at least one of a technical influence index, a technical influence immediacy index, and technology proportion of core node patent.

In any of the above solutions, it is preferred that the step 1 includes the following sub-steps:

    step 11: inputting the names of the technical points to-be-analyzed and evaluated by using the existing science and technology knowledge graph, and determining a plurality of keyword semantics of features of the technical points to-be-analyzed and evaluated through a relationship and a step distance between the technical points to-be-analyzed and evaluated;
    step 12: performing overall data retrieval for the keyword semantics obtained in the step 11 in the paper library, the project library, and the news library;
    step 13: intersecting the keyword semantics obtained in the step 11 with the existing technology cluster, performing overall data retrieval for a result of intersection in the patent library;
    step 14: integrating data retrieval results of the step 12 and the step 13.

In any of the above solutions, it is preferred that the step 2 includes the following sub-steps:

    step 21: performing data cleaning and disambiguation for at least one objective big data in the patents, the papers and the projects, and performing computer emotion calculation for non-objective big data in the news to calculate an authenticity and retain a reliable result;
    step 22: drawing a basic coordinate graph according to different vertical coordinates, the abscissa of the basic coordinate graph being time, and the ordinate being at least one of the number of patent applications, the number of granted patents, the number of partition papers, the number of partition projects and the news;
    step 23: drawing a reference coordinate graph according to different vertical coordinates, the abscissa of the reference coordinate graph being time, and the ordinate being at least one index of the technical influence, the technical influence immediacy and the core node patent.

In any of the above solutions, it is preferred that the step 3 includes the following sub-steps:

    step 31: fitting a curve $f_1(x) = a_1 x + b_1$, wherein $x$ is time, $f_1(x)$ is at least one index of the technical influence, the technical influence immediacy and the core node patent, $a_1$ is a change slope corresponding to the index, and $b_1$ is a curve intercept;

step 32: fitting a curve $f_2(x) = a_2x^2 + b_2x + c$, wherein $x$ is time, $f_2(x)$ is at least one index of the technical influence, the technical influence immediacy and the core node patent, $a_2$ is a growth rate of the change slope corresponding to the index, $b_2$ is a fitting liner term parameter, and c is a curve intercept;

step 33: fitting a model of the curve with reference to a general method of least square method.

In any of the above solutions, it is preferred that the judgment conclusion includes determining a stage the technology maturity is among the following stages: a germination stage, a growth stage, a mature stage, and a decline stage.

In any of the above solutions, it is preferred that it is determined as the germination stage when an ordinate data body in the basic coordinate graph is the number of partition papers, and the germination stage includes an early germination stage and a germination to growth stage.

In any of the above solutions, it is preferred that it is determined that the technology maturity is in the early germination stage when determination conditions below are met:

1) the technical influence of paper is greater than the technical influence of patent, or the technical influence of patent is zero but the technical influence of paper is a positive value;
2) $a_1$ is greater than 1, and $a_2$ is greater than 0 in the curves of technical influence of paper.

In any of the above solutions, it is preferred that it is determined that the technology maturity is in the germination to growth stage when the determination conditions below are met:

1) the papers gradually transition from SCI papers to EI papers, and the technical influence of paper is greater than the technical influence of patent;
2) $a_1$ is greater than 0, $a_2$ is close to 0 or less than 0 in the curves of technical influence of paper, and a growth rate is decreased;
3) $a_1$ is less than 0, $a_2$ is close to 0 or greater than 0 in the curves of technical influence immediacy of paper;
4) $a_1$ is greater than 0, and $a_2$ is greater than 0 in the curves of technical influence of patent;
5) $a_1$ is greater than 0, and $a_2$ is greater than 0 in the curves of core node patent.

In any of the above solutions, it is preferred that it is determined that the technology maturity is in the growth stage when the determination conditions below are met:

1) patent data exceeds paper data in the ordinate data bodies in the basic coordinate graph, and the patent data in the basic coordinate graph tends to be stable, and engineering research project and news data begin to appear;
2) in the reference coordinate graph, the technical influence of patent exceeds the technical influence of paper, the technical influence immediacy is lower than that in the germination stage, and the technology proportion of core node patent tends to be stable;
3) $a_1$ is less than 0 in the curve of technical influence of paper;
4) $a_1$ is less than 0 in the curve of technical influence immediacy of paper;
5) $a_1$ is close to or less than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is close to or less than 0, and $a_2$ is less than 0 in the curves of core node patent.

In any of the above solutions, it is preferred that it is determined that the technology maturity is in the mature stage when the determination conditions below are met:

1) the patent data exceeds paper data in the ordinate data bodies in the basic coordinate graph, and the patent data in the basic coordinate graph tends to be stable, and engineering research project and news data begin to appear;
2) in the reference coordinate graph, the technical influence of patent exceeds the technical influence of paper, the technical influence immediacy is lower than that in the germination stage, and the technology proportion of core node patent tends to be stable;
3) $a_1$ is less than 0 in the curve of technical influence of paper;
4) $a_1$ is less than 0 in the curve of technical influence immediacy of paper;
5) $a_1$ is close to or less than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is close to or less than 0, and $a_2$ is less than 0 in the curves of core node patent.

In any of the above solutions, it is preferred that it is determined that the technology maturity is in the decline stage when the determination conditions below are met:

1) the news data is a main data body, and both the patent data and the paper data fall;
2) $a_1$ is less than -1 in the curve of technical influence of paper;
3) $a_1$ is less than -1 in the curve of technical influence of patent;
4) $a_1$ is less than -1 in the curve of core node patent.

A second object of the present invention is to provide a technology maturity judgment system based on science and technology big data, the system comprises a database, an algorithm library and an index library, and further comprises the following modules:

a data retrieval module, used for performing data retrieval in the database;
a data organization module, used for performing data calculation and organization on a retrieval result;
a data calculation module, used for performing regression calculation on organized data to obtain a technical maturity index;
a summarizing and determining module, used for obtaining a judgment conclusion according to the technical maturity index.

Preferably, the database is a multi-dimensional science and technology database, and the multi-dimensional science and technology database comprises at least one of a patent library, a paper library, a project library and a news library.

In any of the above solutions, it is preferred that the algorithm library includes a science and technology knowledge graph and/or a technical cluster, and the science and technology knowledge graph and/or the technology cluster is used for defining technical points, technology clusters and related technical content thereof.

In any of the above solutions, it is preferred that indexes in the index library include at least one of a technical influence index, a technical influence immediacy index, and technology proportion of core node patent.

In any of the above solutions, it is preferred that data retrieval module includes the following sub-modules:

an overall retrieval sub-module: used for inputting the names of the technical points to-be-analyzed and evaluated by using the existing science and technology knowledge graph,
and determining a plurality of keyword semantics of features of the technical points to-be-analyzed and evaluated through a relationship and a step distance between the technical points to-be-analyzed and evaluated;
a data mining sub-module: used for performing overall data retrieval for the keyword semantics obtained by the overall retrieval sub-module in the paper library, the project library,
and the news library;
a specified retrieval sub-module: used for intersecting the keyword semantics obtained by the overall retrieval sub-module with the existing technology cluster, performing overall data retrieval for a result of intersection in the patent library;
an integration sub-module: used for integrating data retrieval results of the data mining sub-module and the specified retrieval sub-module.

In any of the above solutions, it is preferred that the data organization module includes the following sub-modules:

a data cleaning sub-module: used for performing data cleaning and disambiguation for at least one objective big data in the patents, the papers, the projects, and performing computer emotion calculation for non-objective big data in the news to calculate an authenticity and
retain a reliable result;
a graph drawing sub-module: used for drawing a basic coordinate graph according to different vertical coordinates, the abscissa of the basic coordinate graph being time, and the ordinate being at least one of the number of patent applications, the number of granted patents, the number of partition papers, the number of partition projects and the news;
a graph revising sub-module: used for drawing a reference coordinate graph according to different vertical coordinates, the abscissa of the reference coordinate graph being time, and
the ordinate being at least one index of the technical influence, the technical influence immediacy and the core node patent.

In any of the above solutions, it is preferred that an operation of the data calculation module includes the following steps:

step 31: fitting a curve $f_1(x) = a_1x + b_1$, wherein $x$ is time, $f_1(x)$ is at least one index of the technical influence, the technical influence immediacy and the core node patent, $a_1$ is a change slope corresponding to the index, and $b_1$ is a curve intercept;

step 32: fitting a curve $f_2(x) = a_2x^2 + b_2x + c$, wherein $x$ is time, $f_2(x)$ is at least one index of the technical influence, the technical influence immediacy and the core node patent, $a_2$ is a growth rate of the change slope corresponding to the index, $b_2$ is a fitting liner term parameter, and $c$ is a curve intercept;

step 33: fitting a model of the curve with reference to a general method of least square method.

In any of the above solutions, it is preferred that the judgment conclusion includes determining a stage the technology maturity is among the following stages: a germination stage, a growth stage, a mature stage, and a decline stage.

In any of the above solutions, it is preferred that it is determined as the germination stage when an ordinate data body in the basic coordinate graph is the number of partition papers, and the germination stage includes an early germination stage and a germination to growth stage.

In any of the above solutions, it is preferred that it is determined that the technology maturity is in the early germination stage when determination conditions below are met:

1) the technical influence of paper is greater than the technical influence of patent, or the technical influence of patent is zero but the technical influence of paper is a positive value;

2) $a_1$ is greater than 1, and $a_2$ is greater than 0 in the curves of technical influence of paper.

In any of the above solutions, it is preferred that it is determined that the technology maturity is in the germination to growth stage when the determination conditions below are met:

1) the papers gradually transition from SCI papers to EI papers, and the technical influence of paper is greater than the technical influence of patent;

2) $a_1$ is greater than 0, $a_2$ close to 0 or less than 0 in the curves of technical influence of paper, and a growth rate is decreased;

3) $a_1$ is less than 0, $a_2$ close to 0 or greater than 0 in the curves of technical influence immediacy of paper;

4) $a_1$ is greater than 0, and $a_2$ is greater than 0 in the curves of technical influence of patent;

5) $a_1$ is greater than 0, and $a_2$ is greater than 0 in the curves of core node patent.

In any of the above solutions, it is preferred that it is determined that the technology maturity is in the growth stage when the determination conditions below are met:

1) patent data exceeds paper data in the ordinate data bodies in the basic coordinate graph, and the patent data in the basic coordinate graph tends to be stable, and engineering research project and news data begin to appear;

2) in the reference coordinate graph, the technical influence of patent exceeds the technical influence of paper, the technical influence immediacy is lower than that in the germination stage, and the technology proportion of core node patent tends to be stable;

3) $a_1$ is less than 0 in the curve of technical influence of paper;

4) $a_1$ is less than 0 in the curve of technical influence immediacy of paper;

5) $a_1$ is close to or less than 0, and $a_2$ is close to 0 or less than 0 in the curves of technical influence of patent;

6) $a_1$ is less than 0, and $a_2$ is close to 0 or less than 0 in the curves of technical influence immediacy of patent;

7) $a_1$ is close to or less than 0, and $a_2$ is less than 0 in the curves of core node patent.

In any of the above solutions, it is preferred that it is determined that the technology maturity is in the mature stage when the determination conditions below are met:

1) the patent data exceeds paper data in the ordinate data bodies in the basic coordinate graph, and the patent data in the basic coordinate graph tends to be stable, and engineering research project and news data begin to appear;

2) in the reference coordinate graph, the technical influence of patent exceeds the technical influence of paper, the technical influence immediacy is lower than that in the germination stage, and the technology proportion of core node patent tends to be stable;

3) $a_1$ is less than 0 in the curve of technical influence of paper;

4) $a_1$ is less than 0 in the curve of technical influence immediacy of paper;

5) $a_1$ is close to or less than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is close to or less than 0, and $a_2$ is less than 0 in the curves of core node patent.

In any of the above solutions, it is preferred that it is determined that the technology maturity is in the decline stage when the determination conditions below are met:

1) the news data is a main data body, and both the patent data and the paper data fall;
2) $a_1$ is less than -1 in the curve of technical influence of paper;
3) $a_1$ is less than -1 in the curve of technical influence of patent;
4) $a_1$ is less than -1 in the curve of core node patent.

The present invention provides a technology maturity judgment method and system based on science and technology big data, which overcome the defects of the existing evaluation methods, especially the subjectivity of experts, and the provided technology maturity judgment method based on science and technology big data of patent and the like is more objective and authentic, and can realize semi-automatic calculation by a machine.

## BRIEF DESCRIPTION OF THE DRAWINGS

FIG. 1 is a flowchart of a preferred embodiment of a technology maturity judgment method based on science and technology big data according to the present invention.
FIG. 1A is a flowchart of a data retrieval method of the embodiment shown in FIG. 1 of the technology maturity judgment method based on science and technology big data according to the present invention.
FIG. 1B is a flowchart of a data organization method of the embodiment shown in FIG. 1 of the technology maturity judgment method based on science and technology big data according to the present invention.
FIG. 1C is a flowchart of a data regression calculation method of the embodiment shown in FIG. 1 of the technology maturity judgment method based on science and technology big data according to the present invention.
FIG. 2 is a module diagram of a preferred embodiment of a technology maturity judgment system based on science and technology big data according to the present invention.

## DETAILED DESCRIPTION OF THE EMBODIMENTS

Further description of the present invention is provided below with reference to specific embodiments and drawings.

Embodiment 1

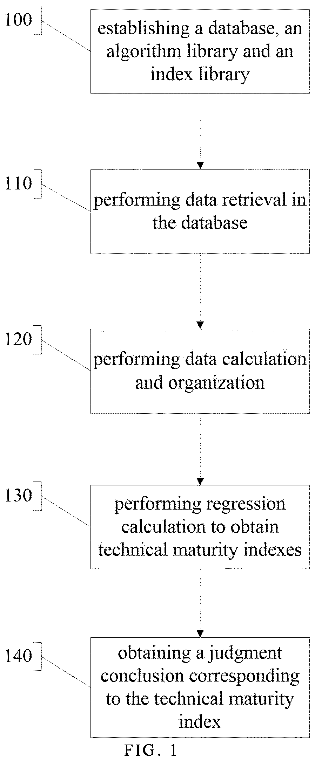

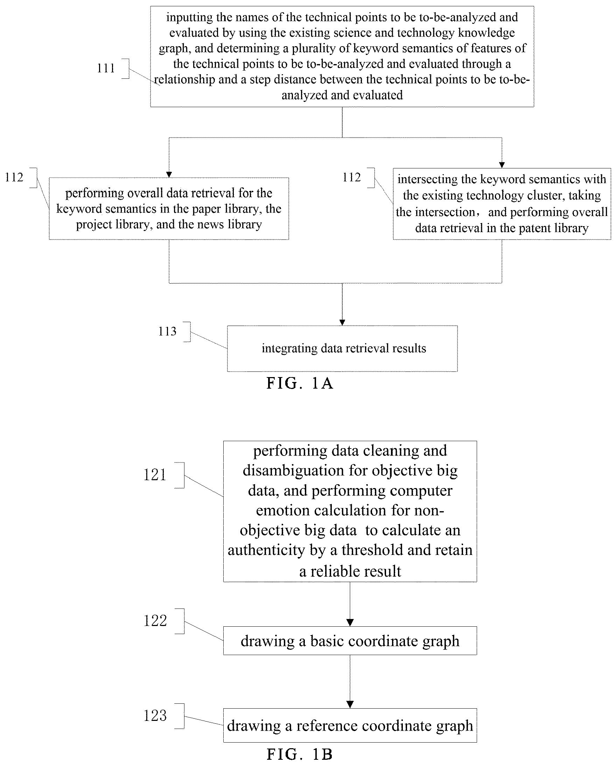

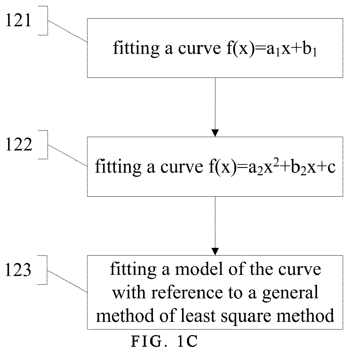

As shown in FIG.1, step 100 is executed to establish a database, an algorithm library and an index library. The database is a multi-dimensional science and technology database, and the multi-dimensional science and technology database comprises at least one of a patent library, a paper library, a project library and a news library; the algorithm library includes a science and technology knowledge graph and/or a technical cluster, and the science and technology knowledge graph and/or the technology cluster is used for defining technical points, technology clusters and related technical content thereof; indexes in the index library include at least one of a technical influence index, a technical influence immediacy index, and technology proportion of core node patent.
Step 110 is executed to perform data retrieval in the database. As shown in FIG. 1A, step 111 is executed to input the names of the technical points to-be-analyzed and evaluated by using the existing science and technology knowledge graph, and determine a plurality of keyword semantics of features of the technical points to-be-analyzed and evaluated through a relationship and a step distance between the technical points to-be-analyzed and evaluated. Step 112 is executed to perform overall data retrieval for the keyword semantics obtained in the step 111 in the paper library, the project library, and the news library. Step 113 is executed to intersect the keyword semantics obtained in the step 111 with the existing technology cluster, and perform overall data retrieval for a result of intersection in the patent library. Step 114 is executed to integrate data retrieval results of the step 112 and the step 113.
Step 120 is executed to perform data calculation and organization on the retrieval result. As shown in FIG. 1B, step 121 is executed to perform data cleaning and disambiguation for at least one objective big data in the patents, the papers, and the projects using existing method, and perform computer emotion calculation for non-objective big data in the news to calculate an authenticity and retain reliable result using existing method. Step 122 is executed to draw a basic coordinate graph according to different vertical coordinates, the abscissa of the basic coordinate graph is time, and the ordinate is at least one of the numbers of patent applications, the number of granted patents, the number of partition papers, the number of partition projects and the news. Step 123 is executed to draw a reference coordinate graph according to different vertical coordinates, the abscissa of the reference coordinate graph is time, and the ordinate is at least one index of the technical influence, the technical influence immediacy and the core node patent.

Step 130 is executed to perform regression calculation on organized data to obtain a technical maturity index. As shown in FIG. 1C, step 131 is executed to fit a curve $f_1(x) = a_1x + b_1$, wherein $x$ is time, $f_1(x)$ is at least one index of the technical influence, the technical influence immediacy and the core node patent, $a_1$ is a change slope corresponding to the index, and $b_1$ is a curve intercept. Step 132 is executed to fit a curve $f_2(x) = a_2x^2 + b_2x + c,$ wherein $x$ is time, $f_2(x)$ is at least one index of the technical influence, the technical influence immediacy and the core node patent, $a_2$ is a growth rate of the change slope corresponding to the index, $b_2$ is a fitting liner term parameter, and $c$ is a curve intercept. Step 133 is executed to fit a model of the curve with reference to a general method of least square method.

Step 140 is executed to obtain a judgment conclusion according to the technical maturity index. The judgment conclusion includes determining a stage the technology maturity is among the following stages: a germination stage, a growth stage, a mature stage, and a decline stage. A method of the judgment is as follows.

1. It is determined as the germination stage when an ordinate data body in the basic coordinate graph is the number of partition papers, and the germination stage includes an early germination stage and a germination to growth stage.

1.1. It is determined that the technology maturity is in the germination to growth stage when the determination conditions below are met:

1) the papers gradually transition from SCI papers to EI papers, and the technical influence of paper is greater than the technical influence of patent;
2) $a_1$ is greater than 0, $a_2$ is close to 0 or less than 0 in the curves of technical influence of paper, and a growth rate is decreased;
3) $a_1$ is less than 0, $a_2$ is close to 0 or greater than 0 in the curves of technical influence immediacy of paper;
4) $a_1$ is greater than 0, and $a_2$ is greater than 0 in the curves of technical influence of patent;
5) $a_1$ is greater than 0, and $a_2$ is greater than 0 in the curves of core node patent.

1.2. It is determined that the technology maturity is in the germination to growth stage when the determination conditions below are met:

1) the papers gradually transition from SCI papers to EI papers, and the technical influence of paper is greater than the technical influence of patent;
2) $a_1$ is greater than 0, $a_2$ is close to 0 or less than 0 in the curves of technical influence of paper, and a growth rate is decreased;
3) $a_1$ is less than 0, $a_2$ is close to 0 or greater than 0 in the curves of technical influence immediacy of paper;
4) $a_1$ is greater than 0, and $a_2$ is greater than 0 in the curves of technical influence of patent;
5) $a_1$ is greater than 0, and $a_2$ is greater than 0 in the curves of core node patent.

2. It is determined that the technology maturity is in the growth stage when the determination conditions below are met:

1) the number of EI paper exceeds the number of SCI paper in the ordinate data bodies in the basic coordinate graph;
2) a growth rate of patent data tends to be stable, the technical influence of patent gradually approaches the technical influence of paper, and the proportion of core node patent rises;
3) $a_1$ is close to 0 in the curve of technical influence of paper;
4) $a_1$ is less than 0, $a_2$ is close to 0 or greater than 0 in the curves of technical influence immediacy of paper;
5) $a_1$ is greater than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is greater than 0, and $a_2$ is close to 0 gradually in the curve of core node patent.

3. It is determined that the technology maturity is in the mature stage when the determination conditions below are met:

1) the patent data exceeds paper data in the ordinate data bodies in the basic coordinate graph, and the patent data in the basic coordinate graph tends to be stable, and engineering research project and news data begin to appear;
2) in the reference coordinate graph, the technical influence of patent exceeds the technical influence of paper, the technical influence immediacy is lower than that in the germination stage, and the technology proportion of core node patent tends to be stable;

3) $a_1$ is less than 0 in the curve of technical influence of paper;

4) $a_1$ is less than 0 in the curve of technical influence immediacy of paper;

5) $a_1$ is close to or less than 0, and $a_2$ is close to 0 or less than 0 in the curves of technical influence of patent;

6) $a_1$ is less than 0, and $a_2$ is close to 0 or less than 0 in the curves of technical influence immediacy of patent;

7) $a_1$ is close to or less than 0, and $a_2$ is less than 0 in the curves of core node patent.

4. It is determined that the technology maturity is in the decline stage when the determination conditions below are met:

1) the news data is a main data body, and both the patent data and the paper data fall;

2) $a_1$ is less than -1 in the curve of technical influence of paper;

3) $a_1$ is less than -1 in the curve of technical influence of patent;

4) $a_1$ is less than -1 in the curve of core node patent.

Embodiment 2

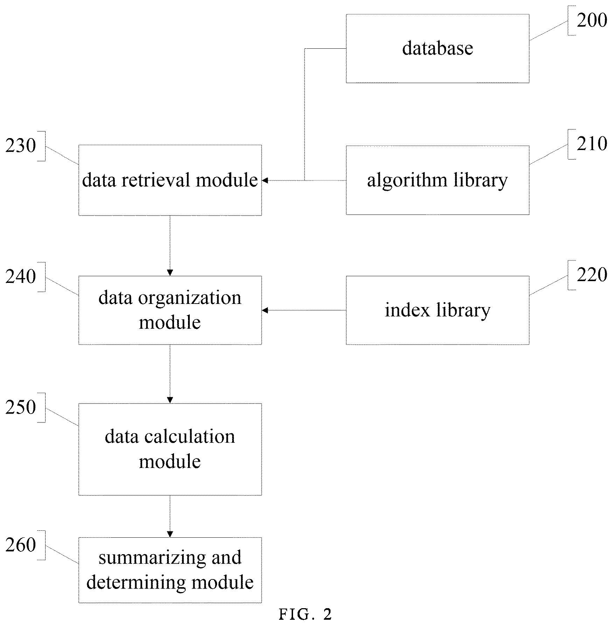

As shown in FIG.2, a technology maturity judgment system based on science and technology big data comprises a database 200, an algorithm library 210, an index library 220, a data retrieval module 230, a data organization module 240, a data calculation module 250 and a summarizing and determining module 260.

The database 200 is a multi-dimensional science and technology database, and the multi-dimensional science and technology database comprises at least one of a patent library, a paper library, a project library and a news library.

The algorithm library 210 includes a science and technology knowledge graph and/or a technical cluster, and the science and technology knowledge graph and/or the technology cluster is used for defining technical points, technology clusters and related technical content thereof.

Indexes in the index library 220 include at least one of a technical influence index, a technical influence immediacy index, and technology proportion core node patent.

The data retrieval module 230 is used for performing data retrieval in the database, and includes the following sub-modules:

an overall retrieval sub-module: used for inputting the names of the technical points to-be-analyzed and evaluated by using the existing science and technology knowledge graph,

and determining a plurality of keyword semantics of features of the technical points to-be-analyzed and evaluated through a relationship and a step distance between the technical points to-be-analyzed and evaluated;

a data mining sub-module: used for performing overall data retrieval for the keyword semantics obtained by the overall retrieval sub-module in the paper library, the project library,

and the news library;

a specified retrieval sub-module: used for intersecting the keyword semantics obtained by the overall retrieval sub-module with the existing technology cluster, performing overall data retrieval for a result of intersection in the patent library;

an integration sub-module: used for integrating data retrieval results of the data mining sub-module and the specified retrieval sub-module.

The data organization module 240 is used for performing data calculation and organization on a retrieval result, and includes the following sub-modules:

a data cleaning sub-module: used for performing data cleaning and disambiguation for at least one objective big data in the patents, the papers, the projects, and performing computer emotion calculation for non-objective big data in the news to calculate an authenticity and retain a reliable result;

a graph drawing sub-module: used for drawing a basic coordinate graph according to different vertical coordinates, the abscissa of the basic coordinate graph being time, and the ordinate being at least one of the number of patent applications, the number of granted patents, the number of partition papers, the number of partition projects and the news;

a graph revising sub-module: used for drawing a reference coordinate graph according to different vertical coordinates, the abscissa of the reference coordinate graph being time, and the ordinate being at least one index of the technical influence, the technical influence immediacy and the core node patent.

The data calculation module 250 is used for performing regression calculation on organized data to obtain a technical maturity index. An operation of the data calculation module includes the following steps:

step 31: fitting a curve $f_1(x) = a_1 x + b_1$, wherein $x$ is time, $f_1(x)$ is at least one index of the technical influence, the technical influence immediacy and the core node patent, $a_1$ is a change slope corresponding to the index, and $b_1$ is a curve intercept;

step 32: fitting a curve $f_2(x) = a_2 x^2 + b_2 x + c$, wherein $x$ is time, $f_2(x)$ is at least one index of the technical influence, the technical influence immediacy and the core node patent, $a_2$ is a growth rate of the change slope corresponding to the index, $b_2$ is a fitting liner term parameter, and $c$ is a curve intercept;

step 33: fitting a model of the curve with reference to a general method of least square method.

The summarizing and determining module 260is used for obtaining a judgment conclusion according to the technical maturity index. The judgment conclusion includes the following several cases.

1. It is determined as a germination stage when an ordinate data body in the basic coordinate graph is the number of partition papers, and the germination stage includes an early germination stage and a germination to growth stage.

1.1. It is determined that the technology maturity is in the early germination stage when determination conditions below are met:

1) the technical influence of paper is greater than the technical influence of patent, or the technical influence of patent is zero but the technical influence of paper is a positive value;

2) $a_1$ is greater than 1, and $a_2$ is greater than 0 in the curves of technical influence of paper.

1.2. It is determined that the technology maturity is in the germination to e growth stage when the determination conditions below are met:

1) the papers gradually transition from SCI papers to EI papers, and the technical influence of paper is greater than the technical influence of patent;

2) $a_1$ is greater than 0, $a_2$ is close to 0 or less than 0 in the curves of technical influence of paper, and a growth rate is decreased;

3) $a_1$ is less than 0, $a_2$ is close to 0 or greater than 0 in the curves of technical influence immediacy of paper;

4) $a_1$ is greater than 0, and $a_2$ is greater than 0 in the curves of technical influence of patent;

5) $a_1$ is greater than 0, and $a_2$ is greater than 0 in the curves of core node patent.

2. It is determined that the technology maturity is in the growth stage when the determination conditions below are met:

1) patent data exceeds paper data in the ordinate data bodies in the basic coordinate graph, and the patent data in the basic coordinate graph tends to be stable, and engineering research project and news data begin to appear;

2) in the reference coordinate graph, the technical influence of patent exceeds the technical influence of paper, the technical influence immediacy is lower than that in the germination stage, and the technology proportion of core node patent tends to be stable;

3) $a_1$ is less than 0 in the curve of technical influence of paper;

4) $a_1$ is less than 0 in the curve of technical influence immediacy of paper;

5) $a_1$ is close to or less than 0, and $a_2$ is close to 0 or less than 0 in the curves of technical influence of patent;

6) $a_1$ is less than 0, and $a_2$ is close to 0 or less than 0 in the curves of technical influence immediacy of patent;

7) $a_1$ is close to or less than 0, and $a_2$ is less than 0 in the curves of core node patent.

3. It is determined that the technology maturity is in the mature stage when the determination conditions below are met:

1) the patent data exceeds paper data in the ordinate data bodies in the basic coordinate graph, and the patent data in the basic coordinate graph tends to be stable, and engineering research project and news data begin to appear;

2) in the reference coordinate graph, the technical influence of patent exceeds the technical influence of paper, the technical influence immediacy is lower than that in the germination stage, and the technology proportion of core node patent tends to be stable;

3) $a_1$ is less than 0 in the curve of technical influence of paper;

4) $a_1$ is less than 0 in the curve of technical influence immediacy of paper;

5) $a_1$ is close to or less than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is close to or less than 0, and $a_2$ is less than 0 in the curves of core node patent.

4. It is determined that the technology maturity is in the decline stage when the determination conditions below are met:

1) the news data is a main data body, and both the patent data and the paper data fall;
2) $a_1$ is less than -1 in the curve of technical influence of paper;
3) $a_1$ is less than -1 in the curve of technical influence of patent;
4) $a_1$ is less than -1 in the curve of core node patent.

Embodiment 3

The present invention is mainly based on the patent analysis method, and assisted by technical big data analysis of as papers, projects and the like, technical points are placed in a technology cluster associated with the technology to perform comprehensive analysis by multi-dimensional evaluation indexes and algorithm. Mapping between science and technology big data indexes and technology maturity is established, automatic judgment is achieved, and the method is different from a traditional expert review method and the like which need a large amount of artificial subjective work, and the method is more objective and authentic.
Technical solution of the present invention overcomes the defects of the existing evaluation methods, especially the subjectivity of experts. A provided technology maturity judgment method based on science and technology big data of patent and the like is with more objective and authentic, can realize semi-automatic calculation by a machine, and includes the following steps.
Step 1: establish a database, an algorithm library and an index library.
The step 1 includes the following sub-steps:

step 11: establishing a multi-dimensional science and technology database which covers a patent library, a paper library ( be partitioned, and includes SCI and EI ), a project library (be partitioned, and includes basic research projects, application research projects and industry promotion projects ), and a news library;
step 12: establishing the algorithm library which covers a science and technology knowledge graph and a technical cluster, comprehensively defines intension and extension of technical points and the technology clusters, and quantifies mutual influence nodes of technology;
step 13: establishing the index library which covers a patent index, a paper index, a project index, a news index;
the step 13 includes the following indexes:

technical influence: obtained by normalization of citations of paper and patent and rank of referrers in the technical cluster, and includes the technical influence of patent and the technical influence of paper;
technical influence immediacy: indicating average time of the technical influence of patent and the technical influence of paper;
technology proportion of core node patent: indicating a value proportion of influence of patent for designated technology in the same technical cluster which is calculated using a complex technology network algorithm under technical cluster.

Step 2: construct a search strategy, and perform data retrieval in the multi-dimensional science and technology database in the step 11.
The step 2 includes the following sub-steps:

step 21: performing data cleaning and disambiguation for at least one objective big data in the patents, the papers, and the projects using an existing method;
step 22: drawing a basic coordinate graph according to different vertical coordinates, the abscissa of the basic coordinate graph being time, and the ordinate being at least one of the number of patent applications, the number of granted patents, the number of partition papers,
the number of partition projects and the news;
the number of partition papers is specifically interpreted as:

the number of partition papers mainly comprises the number of SCI papers and the number of EI papers, wherein, the SCI papers refer to citation index publications published by the United States Institute for Scientific Information (ISI), and 3300 science and technology journals are selected from the world wide variety of journals relating to more than 100 fields of natural basic science. The EI papers refer to documents listed in the Engineering Index Database in the global scope, and mainly include important documents in the field of engineering technology;

step 23: drawing a reference coordinate graph according to different vertical coordinates, the abscissa of the reference coordinate graph being time, and the ordinate being at least one index of the technical influence, the technical influence immediacy and the core node patent.

Step 3: perform data calculation and organization.

The step 3 includes the following sub-steps:

step 31: using an existing method to perform data cleaning and disambiguation for at least one objective big data in the patents, the papers, and the projects, and perform computer emotion calculation for non-objective big data in the news to calculate an authenticity and retain a reliable result;

step 32: drawing a basic coordinate graph, the abscissa of the basic coordinate graph being time, and the ordinate being at least one of the number of patent applications, the number of granted patent, the number of partition papers, the number of partition projects, and the news;

step 33: drawing a reference coordinate graph, the abscissa of the reference coordinate graph being time, and the ordinate being at least one index of the technical influence, the technical influence immediacy, and the core node patent.

Step 4: perform regression calculation.

The step 4 includes the following sub-steps:

step 41: fitting a curve $f_1(x) = a_1x + b_1$, wherein $x$ is time, $f_1(x)$ is at least one index of the technical influence, the technical influence immediacy and the core node patent, $a_1$ is a change slope corresponding to the index, and $b_1$ is a curve intercept;

step 42: fitting a curve $f_2(x) = a_2x^2 + b_2x + c$, wherein $x$ is time, $f_2(x)$ is at least one index of the technical influence, the technical influence immediacy and the core node patent, $a_2$ is the growth rate of the change slope corresponding to the index, $b_2$ is a fitting liner term parameter, and $c$ is a curve intercept;

step 43: fitting a model of the curve with reference to a general method of least square method, i.e. the following general method:

for

$$f(x) = \sum_{k=0}^{n} e_i x^k (i = 1,2, ..., m; \ k = 0,1,2, ..., n),$$

residual error of the curve is

$$I = \sum_{i=0}^{m} [f(x_i) - y_i]^2 = \sum_{i=0}^{m} (\sum_{k=0}^{n} e_i x^k - y_i)^2 = min$$

partial derivative of $e_i$ for I is calculated to be 0, resulting in:

$$\frac{\partial I}{\partial e_i} = 2 \sum_{i=0}^{m} (\sum_{k=0}^{n} e_i x^k - y_i) x_i^j = 0, j = 0,1, ...n$$

a transformation obtained is:

$$\sum_{i=0}^{m} (\sum_{k=0}^{n} x^{k+j}) = \sum_{k=0}^{n} x_i^j y_i, j = 0,1, ...n$$

the above equations are solved to obtain a unique solution, and then the fitting curve f(x) is determined.

Step 5: as shown in Table 1, according to indexes, a conclusion is obtained as follows.

It is determined as a germination stage when an ordinate data body in the basic coordinate graph is paper data.

It is determined that it is in an early germination stage when the technical influence of paper is greater than the technical influence of patent, or the technical influence of patent is zero but the technical influence of paper is a positive value; and $a_1$ is greater than 1, and $a_2$ is greater than 0 in the curves of technical influence of paper. The early germination stage is similar to a basic research stage or a concept research stage of TRL1 -2, the following judgment conditions need to be met: the technical influence of paper is greater than the technical influence of patent, or the technical influence of patent is zero but the technical influence of paper is a positive value; and for regression curves of the technical influence of paper, $a_1$ is greater than 1, and $a_2$ is greater than 0.

A germination to growth stage is similar to an application analysis stage or a laboratory research stage of TRL3 -4, and the following determination conditions need to be met: the papers gradually transition from the SCI papers to the EI papers, and the technical influence of paper is greater than the technical influence of patent; for the technical influence of paper, $a_1$ is greater than 0, $a_2$ is close to 0 or less than 0, and a growth rate is decreased; for the technical influence immediacy of paper, $a_1$ is less than 0, $a_2$ is close to 0 or greater than 0; for the technical influence of patent, $a_1$ is greater than 0, and $a_2$ is greater than 0; for the core node patent, $a_1$ is greater than 0, and $a_2$ is greater than 0.

It is determined as a growth stage when the number of EI papers exceeds the number of SCI papers in the ordinate data bodies in the basic coordinate graph, and a growth rate of patent data tends to be stable. At this moment, the technical influence of patent gradually approaches the technical influence of paper, and the proportion of core node patent rises; for the technical influence of paper, $a_1$ is close to 0; for the technical influence immediacy of paper, $a_1$ is less than 0, $a_2$ is close to 0 or greater than 0; for the technical influence of patent, $a_1$ is greater than 0, and $a_2$ is close to 0 or less than 0; for the technical influence immediacy of patent, $a_1$ is less than 0, and $a_2$ is close to 0 or less than 0; for the core node patent, $a_1$ is greater than 0, and $a_2$ is close to 0.

It is determined as a mature stage when the patent data exceeds the paper data in the ordinate data bodies in the basic coordinate graph. At this moment, the patent data in the basic coordinate graph tends to be stable, and engineering research project and news data begin to appear, in the reference coordinate graph, the technical influence of patent exceeds the technical influence of paper, the technical influence immediacy is lower than that in the germination stage, and the technology proportion of core node patent tends to be stable; for the technical influence of paper, $a_1$ is less than 0; for the technical influence immediacy of paper, $a_1$ is less than 0; for the technical influence of patent, $a_1$ is close to or less than 0, and $a_2$ is close to 0 or less than 0; for the technical influence immediacy of patent, $a_1$ is less than 0, and $a_2$ is close to 0 or less than 0; for the core node patent, $a_1$ is close to or less than 0, and $a_2$ is less than 0.

It is determined in a decline stage when the news data is a main data body, and both the patent data and paper data fall obviously. At this moment, for the technical influence of paper, $a_1$ is less than -1; for the technical influence of patent, $a_1$ is less than -1; for the core node patent, $a_1$ is less than -1.

Table 1

| Technology life cycle | Data characteristics | Technical stage | Data body source | level | Research stage |
|---|---|---|---|---|---|
| Germination stage | It is determined that it is in an early germination stage when the technical influence of paper is greater than the technical influence of patent, or the technical influence of patent is zero but the technical influence of paper is a positive value; and $a_1$ is greater than 1, and $a_2$ is greater than 0 in the curves of technical influence of paper. The early germination stage is similar to a basic research stage or a concept | Laboratory stage | Paper data ( transition from SCI to EI) Basic research projects | TRL1 | Basic research |
| | | | | TRL2 | Concept research |

(continued)

| Technology life cycle | Data characteristics | Technical stage | Data body source | level | Research stage |
|---|---|---|---|---|---|
| | research stage of TRL1 -2, the following judgment conditions need to be met: the technical influence of paper is greater than the technical influence of patent, or the technical influence of patent is zero but the technical influence of paper is a positive value; and for regression curves of the technical influence of paper, $a_1$ is greater than 1, and $a_2$ is greater than 0. A germination to growth stage is similar to an application analysis stage or a laboratory research stage of TRL3 -4, and the following determination conditions need to be met: the papers gradually transition from the SCI papers to the EI papers, and the technical influence of paper is greater than the technical influence of patent; for the technical influence of paper, $a_1$ is greater than 0, $a_2$ is close to 0 or less than 0, and a growth rate is decreased; for the technical influence immediacy of paper, $a_1$ is less than 0, $a_2$ is close to 0 or greater than 0; for the technical influence of patent, $a_1$ is greater than 0, and $a_2$ is greater than 0; for the core node patent, $a_1$ is greater than 0, and $a_2$ is greater than 0. | Engineering stage | Patent data Engineering research project | TRL3 | Application analysis and laboratory research |
| | | | | TRL4 | Laboratory prototype |
| Growth stage | the technical influence of patent gradually approaches the technical influence of paper, and the proportion of core node patent rises; for the technical influence of paper, $a_1$ is close to 0; for the technical influence immediacy of paper, $a_1$ is less than 0, $a_2$ is close to 0 or greater than 0; for the technical influence of patent, $a_1$ is greater than 0, and $a_2$ is close to 0 or less than 0; for the technical influence immediacy of patent, $a_1$ is less than 0, and $a_2$ is close to 0 or less than 0; for the core node patent, $a_1$ is greater than 0, and $a_2$ is close to 0 | | | TRL5 | Complete laboratory model machine |
| | | | | TRL6 | System demonstration in simulation environment |
| | | Industrialization stage | Patent data Engineering research projectNews data | TRL7 | System display in real environment |
| Mature stag | the patent data in the basic coordinate graph tends to be stable; engineering research project data and news data begin to appear; in the reference coordinate graph, the technical influence of patent exceeds the technical | | | TRL8 | Approval test |

(continued)

| Technology life cycle | Data characteristics | Technical stage | Data body source | level | Research stage |
|---|---|---|---|---|---|
| | influence of paper; the technical influence immediacy is lower than that in the germination stage; the technology proportion of core node patent tends to be stable; for the technical influence of paper, $a_1$ is less than 0; for the technical influence immediacy of paper, $a_1$ is less than 0; for the technical influence of patent, $a_1$ is close to or less than 0, and $a_2$ is close to 0 or less than 0; for the technical influence immediacy of patent, $a_1$ is less than 0, and $a_2$ is close to 0 or less than 0; for the core node patent, $a_1$ is close to or less than 0, and $a_2$ is less than 0 | | | TRL9 | Operation and evaluation |
| Decline stage | for the technical influence of paper, $a_1$ is less than -1; for the technical influence of patent, $a_1$ is less than -1; for the core node patent, $a_1$ is less than -1 in the core node patent. | | News data | | |

In order to better understand the present invention, the detailed description is made above in conjunction with the specific embodiments of the present invention, but it is not a limitation of the present invention. Any simple modification to the above embodiments based on the technical essence of the present invention still belongs to the scope of the technical solution of the present invention. Each embodiment in this specification focuses on differences from other embodiments, and the same or similar parts between the various embodiments can be referred to each other. As for the system embodiment, since it basically corresponds to the method embodiment, the description is relatively simple, and the relevant part can refer to the part of the description of the method embodiment.

**Claims**

1. A technology maturity judgment method based on science and technology big data, comprising establishing a database, an algorithm library and an index library, **characterized in that**, further comprises the following steps:

   step 1: performing data retrieval in the database;
   step 2: performing data calculation and organization on a retrieval result;
   step 3: performing regression calculation on organized data to obtain a technical maturity index;
   step 4: obtaining a judgment conclusion according to the technical maturity index.

2. The technology maturity judgment method based on science and technology big data according to claim 1, **characterized in that**, the database is a multi-dimensional science and technology database, and the multi-dimensional science and technology database comprises at least one of a patent library, a paper library, a project library and a news library.

3. The technology maturity judgment method based on science and technology big data according to claim 2, **characterized in that**, the algorithm library comprises a science and technology knowledge graph and/or a technical cluster, and the science and technology knowledge graph and/or the technology cluster is used for defining technical points, technology clusters and related technical content thereof.

4. The technology maturity judgment method based on science and technology big data according to claim 3, **characterized in that**, indexes in the index library comprise at least one of a technical influence index, a technical influence immediacy index, and technology proportion of core node patent.

5. The technology maturity judgment method based on science and technology big data according to claim 4, **characterized in that**, the step 1 comprises the following sub-steps:

step 11: inputting the names of the technical points to-be-analyzed and evaluated by using the existing science and technology knowledge graph, and determining a plurality of keyword semantics of features of the technical points to-be-analyzed and evaluated through a relationship and a step distance between the technical points to-be-analyzed and evaluated;
step 12: performing overall data retrieval for the keyword semantics obtained in the step 11 in the paper library, the project library, and the news library;
step 13: intersecting the keyword semantics obtained in the step 11 with the existing technology cluster, performing overall data retrieval for a result of intersection in the patent library;
step 14: integrating data retrieval results of the step 12 and the step 13.

6. The technology maturity judgment method based on science and technology big data according to claim 5, **characterized in that**, the step 2 comprises the following sub-steps:

step 21: performing data cleaning and disambiguation for at least one objective big data in the patents, the papers and the project, and performing computer emotion calculation for non-objective big data in the news to calculate an authenticity and retain a reliable result;
step 22: drawing a basic coordinate graph according to different vertical coordinates, the abscissa of the basic coordinate graph being time, and the ordinate being at least one of the number of patent applications, the number of granted patents, the number of partition papers, the number of partition projects and the news;
step 23: drawing a reference coordinate graph according to different vertical coordinates, the abscissa of the reference coordinate graph being time, and the ordinate being at least one index of the technical influence, the technical influence immediacy and the core node patent.

7. The technology maturity judgment method based on science and technology big data according to claim 6, **characterized in that**, the step 3 comprises the following sub-steps:

step 31: fitting a curve $f_1(x) = a_1 x + b_1$, wherein $x$ is time, $f_1(x)$ is at least one index of the technical influence, the technical influence immediacy and the core node patent, $a_1$ is a change slope corresponding to the index, and $b_1$ is a curve intercept;
step 32: fitting a curve $f_2(x) = a_2 x^2 + b_2 x + c$, wherein $x$ is time, $f_2(x)$ is at least one index of the technical influence, the technical influence immediacy and the core node patent, $a_2$ is the growth rate of the change slope corresponding to the index, $b_2$ is a fitting liner term parameter, and $c$ is a curve intercept;
step 33: fitting a model of the curve with reference to a general method of least square method.

8. The technology maturity judgment method based on science and technology big data according to claim 7, **characterized in that**, the judgment conclusion comprises determining a stage that the technology maturity is among the following stages: a germination stage, a growth stage, a mature stage, and a decline stage.

9. The technology maturity judgment method based on science and technology big data according to claim 8, **characterized in that**, it is determined as the germination stage when an ordinate data body in the basic coordinate graph is the number of partition papers, and the germination stage includes an early germination stage and a germination to growth stage.

10. The technology maturity judgment method based on science and technology big data according to claim 9, **characterized in that**, it is determined that the technology maturity is in the early germination stage when determination conditions below are met:

1) the technical influence of paper is greater than the technical influence of patent, or the technical influence of patent is zero but the technical influence of paper is a positive value;
2) $a_1$ is greater than 1, and $a_2$ is greater than 0 in the curves of technical influence of paper.

**11.** The technology maturity judgment method based on science and technology big data according to claim 9, **characterized in that**, it is determined that the technology maturity is in the germination to growth stage when the determination conditions below are met:

1) the papers gradually transition from SCI papers to EI papers, and the technical influence of paper is greater than the technical influence of patent;
2) $a_1$ is greater than 0, $a_2$ is close to 0 or less than 0 in the curves of technical influence of paper, and a growth rate is decreased;
3) $a_1$ is less than 0, $a_2$ is close to 0 or greater than 0 in the curves of technical influence immediacy of paper;
4) $a_1$ is greater than 0, and $a_2$ is greater than 0 in the curves of technical influence of patent;
5) $a_1$ is greater than 0, and $a_2$ is greater than 0 in the curves of core node patent.

**12.** The technology maturity judgment method based on science and technology big data according to claim 7, **characterized in that**, it is determined that the technology maturity is in the growth stage when the determination conditions below are met:

1) the number of EI paper exceeds the number of SCI paper in the ordinate data bodies in the basic coordinate graph;
2) a growth rate of patent data tends to be stable, the technical influence of patent gradually approaches the technical influence of paper, and the proportion of core node patent rises;
3) $a_1$ is close to 0 in the curve of technical influence of paper;
4) $a_1$ is less than 0, $a_2$ is close to 0 or greater than 0 in the curves of technical influence immediacy of paper;
5) $a_1$ is greater than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is greater than 0, and $a_2$ is close to 0 gradually in the curve of core node patent.

**13.** The technology maturity judgment method based on science and technology big data according to claim 7, **characterized in that**, it is determined that the technology maturity is in the mature stage when the determination conditions below are met:

1) the patent data exceed paper data in the ordinate data bodies in the basic coordinate graph, and the patent data in the basic coordinate graph tends to be stable, and engineering research project and news data begin to appear;
2) in the reference coordinate graph, technical influence of patent exceeds the technical influence of paper, the technical influence immediacy is lower than that in the germination stage, and the technology proportion of core node patent tends to be stable;
3) $a_1$ is less than 0 in the curve of technical influence of paper;
4) $a_1$ is less than 0 in the curve of technical influence immediacy of paper;
5) $a_1$ is close to or less than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is close to or less than 0, and $a_2$ is less than 0 in the curves of core node patent;

**14.** The technology maturity judgment method based on science and technology big data according to claim 7, **characterized in that**, it is determined that the technology maturity is in the decline stage when the determination conditions below are met:

1) the news data is a main data body, and both the patent data and the paper data fall;
2) $a_1$ is less than -1 in the curve of technical influence of paper;
3) $a_1$ is less than -1 in the curve of technical influence of patent;
4) $a_1$ is less than -1 in the curve of core node patent.

**15.** A technology maturity judgment system based on science and technology big data, comprising a database, an algorithm library and an index library, **characterized in that**, further comprises the following modules:

a data retrieval module, used for performing data retrieval in the database;
a data organization module, used for performing data calculation and organization on a retrieval result;
a data calculation module, used for performing regression calculation on organized data to obtain a technical maturity index;

a summarizing and determining module, used for obtaining a judgment conclusion according to the technical maturity index.

16. The technology maturity judgment system based on science and technology big data according to claim 15, **characterized in that**, the database is a multi-dimensional science and technology database, and the multi-dimensional science and technology database comprises at least one of a patent library, a paper library, a project library and a news library.

17. The technology maturity judgment system based on science and technology big data according to claim 16, **characterized in that**, the algorithm library comprises a science and technology knowledge graph and/or a technical cluster, and the science and technology knowledge graph and/or the technology cluster is used for defining technical points, technology clusters and related technical content thereof.

18. The technology maturity judgment system based on science and technology big data according to claim 17, **characterized in that**, indexes in the index library comprise at least one of a technical influence index, a technical influence immediacy index, and technology proportion of core node patent.

19. The technology maturity judgment system based on science and technology big data according to claim 18, **characterized in that**, the data retrieval module comprises the following sub-modules:

an overall retrieval sub-module: used for inputting the names of the technical points to-be-analyzed and evaluated by using the existing science and technology knowledge graph, and determining a plurality of keyword semantics of features of the technical points to-be-analyzed and evaluated through a relationship and a step distance between the technical points to-be-analyzed and evaluated;
a data mining sub-module: used for performing overall data retrieval for the keyword semantics obtained by the overall retrieval sub-module in the paper library, the project library, and the news library;
a specified retrieval sub-module: used for intersecting the keyword semantics obtained by the overall retrieval sub-module with the existing technology cluster, performing overall data retrieval for a result of intersection in the patent library;
an integration sub-module: used for integrating data retrieval results of the data mining sub-module and the specified retrieval sub-module.

20. The technology maturity judgment system based on science and technology big data according to claim 19, **characterized in that**, the data organization module comprises the following sub-modules:

a data cleaning sub-module: used for performing data cleaning and disambiguation for at least one objective big data in the patents, the papers, the projects, and performing computer emotion calculation for non-objective big data in the news to calculate an authenticity and retain a reliable result;
a graph drawing sub-module: used for drawing a basic coordinate graph according to different vertical coordinates, the abscissa of the basic coordinate graph being time, and the ordinate being at least one of the number of patent applications, the number of granted patents, the number of partition papers, the number of partition projects and the news;
a graph revising sub-module: used for drawing a reference coordinate graph according to different vertical coordinates, the abscissa of the reference coordinate graph being time, and the ordinate being at least one index of the technical influence, the technical influence immediacy and the core node patent.

21. The technology maturity judgment system based on science and technology big data according to claim 15, **characterized in that**, an operation of the data calculation module comprises the following steps:

step 31: fitting a curve $f_1(x) = a_1x + b_1$, wherein $x$ is time, $f_1(x)$ is at least one index of the technical influence, the technical influence immediacy and the core node patent, $a_1$ is a change slope corresponding to the index, and $b_1$ is a curve intercept;
step 32: fitting a curve $f_2(x) = a_2x^2 + b_2x + c$, wherein $x$ is time, $f_2(x)$ is at least one index of the technical influence, the technical influence immediacy and the core node patent, $a_2$ is a growth rate of the change slope corresponding to the index, $b_2$ is a fitting liner term parameter, and $c$ is a curve intercept;
step 33: fitting a model of the curve with reference to a general method of least square method.

22. The technology maturity judgment system based on science and technology big data according to claim 21, **char-**

**acterized in that**, the judgment conclusion comprises determining a stage the technology maturity is in among the following stages: a germination stage, a growth stage, a mature stage, and a decline stage.

23. The technology maturity judgment system based on science and technology big data according to claim 22, **characterized in that**, it is determined as the germination stage when an ordinate data body in the basic coordinate graph is the number of partition papers, and the germination stage includes an early germination stage and a germination to growth stage.

24. The technology maturity judgment system based on science and technology big data according to claim 23, **characterized in that**, it is determined that the technology maturity is in the early germination stage when determination conditions below are met:

1) the technical influence of paper is greater than the technical influence of patent, or the technical influence of patent is zero but the technical influence of paper is a positive value;
2) $a_1$ is greater than 1, and $a_2$ is greater than 0 in the curves of technical influence of paper.

25. The technology maturity judgment system based on science and technology big data according to claim 23, **characterized in that**, it is determined that the technology maturity is in the germination to growth stage when the determination conditions below are met:

1) the papers gradually transition from SCI papers to EI papers, and the technical influence of paper is greater than the technical influence of patent;
2) $a_1$ is greater than 0, $a_2$ is close to 0 or less than 0 in the curves of technical influence of paper, and a growth rate is decreased;
3) $a_1$ is less than 0, $a_2$ is close to 0 or greater than 0 in the curves of technical influence immediacy of paper;
4) $a_1$ is greater than 0, and $a_2$ is greater than 0 in the curves of technical influence of patent;
5) $a_1$ is greater than 0, and $a_2$ is greater than 0 in the curves of core node patent.

26. The technology maturity judgment system based on science and technology big data according to claim 22, **characterized in that**, it is determined that the technology maturity is in the growth stage when the determination conditions below are met:

1) the number of EI paper exceeds the number of SCI paper in the ordinate data bodies in the basic coordinate graph;
2) a growth rate of patent data tends to be stable, the technical influence of patent gradually approaches the technical influence of paper, and the proportion of core node patent rises;
3) $a_1$ is close to 0 in the curve of technical influence of paper;
4) $a_1$ is less than 0, $a_2$ is close to 0 or greater than 0 in the curves of technical influence immediacy of paper;
5) $a_1$ is greater than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is greater than 0, and $a_2$ is close to 0 gradually in the curves of core node patent.

27. The technology maturity judgment system based on science and technology big data according to claim 22, **characterized in that**, it is determined that the technology maturity is in the mature stage when the determination conditions below are met:

1) the patent data exceeds paper data in the ordinate data bodies in the basic coordinate graph, and the patent data in the basic coordinate graph tends to be stable, and engineering research project and news data begin to appear;
2) in the reference coordinate graph, the technical influence of patent exceeds the technical influence of paper, the technical influence immediacy is lower than that in the germination stage, and the technology proportion of core node patent tends to be stable;
3) $a_1$ is less than 0 in the curve of technical influence of paper;
4) $a_1$ is less than 0 in the curve of technical influence immediacy of paper;
5) $a_1$ is close to or less than 0, and $a_2$ is close to 0 or less than 0 in the curves of technical influence of patent;
6) $a_1$ is less than 0, and $a_2$ is close to 0 or less than 0 in the curves of technical influence immediacy of patent;
7) $a_1$ is close to or less than 0, and $a_2$ is less than 0 in the curves of core node patent.

**28.** The technology maturity judgment system based on science and technology big data according to claim 22, **characterized in that**, it is determined that the technology maturity is in the decline stage when the determination conditions below are met:

    1) the news data is a main data body, and both the patent data and the paper data fall;
    2) $a_1$ is less than -1 in the curve of technical influence of paper;
    3) $a_1$ is less than -1 in the curve of technical influence patent;
    4) $a_1$ is less than -1 in the curve of core node patent.

100 — establishing a database, an algorithm library and an index library

110 — performing data retrieval in the database

120 — performing data calculation and organization

130 — performing regression calculation to obtain technical maturity indexes

140 — obtaining a judgment conclusion corresponding to the technical maturity index

FIG. 1

111 — inputting the names of the technical points to be to-be-analyzed and evaluated by using the existing science and technology knowledge graph, and determining a plurality of keyword semantics of features of the technical points to be to-be-analyzed and evaluated through a relationship and a step distance between the technical points to be to-be-analyzed and evaluated

112 — performing overall data retrieval for the keyword semantics in the paper library, the project library, and the news library

112 — intersecting the keyword semantics with the existing technology cluster, taking the intersection, and performing overall data retrieval in the patent library

113 — integrating data retrieval results

FIG. 1A

121 — performing data cleaning and disambiguation for objective big data, and performing computer emotion calculation for non-objective big data to calculate an authenticity by a threshold and retain a reliable result

122 — drawing a basic coordinate graph

123 — drawing a reference coordinate graph

FIG. 1B

121 — fitting a curve $f(x)=a_1x+b_1$

122 — fitting a curve $f(x)=a_2x^2+b_2x+c$

123 — fitting a model of the curve with reference to a general method of least square method

FIG. 1C

FIG. 2

<div align="center">

**INTERNATIONAL SEARCH REPORT**

</div>

| International application No. |
| --- |
| **PCT/CN2020/073118** |

**A.    CLASSIFICATION OF SUBJECT MATTER**

G06Q 10/06(2012.01)i;   G06F 16/2458(2019.01)i

According to International Patent Classification (IPC) or to both national classification and IPC

**B.    FIELDS SEARCHED**

Minimum documentation searched (classification system followed by classification symbols)

G06Q, G06F

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 科技, 大数据, 技术, 成熟度, 判断, 数据库, 指标, 检索, 回归, 专利分析, 论文, 最小二乘法, 曲线, 自动化, technology, technological, scientific, big data, maturity, readiness, TRL, judgment, database, indicator, retrieval, search, regression, patent analysis, paper, least squares, curve, automation

**C.    DOCUMENTS CONSIDERED TO BE RELEVANT**

| Category* | Citation of document, with indication, where appropriate, of the relevant passages | Relevant to claim No. |
| --- | --- | --- |
| X | CN 105184078 A (SOUTH CHINA UNIVERSITY OF TECHNOLOGY) 23 December 2015 (2015-12-23)<br>    description, paragraphs [0019]-[0040] and [0066]-[0067] | 1-28 |
| A | CN 105678659 A (CHINA NORTH INDUSTRY NEW TECHNOLOGY PROMOTION INSTITUTE) 15 June 2016 (2016-06-15)<br>    entire document | 1-28 |
| A | CN 101276345 A (JZMC INTELLECTUAL DATA SCIENCE & TECHNOLOGY CO., LTD.) 01 October 2008 (2008-10-01)<br>    entire document | 1-28 |
| A | CN 106570616 A (STATE GRID SHANGHAI MUNICIPAL ELECTRIC POWER COMPANY et al.) 19 April 2017 (2017-04-19)<br>    entire document | 1-28 |
| A | CN 108614867 A (NATIONAL CENTER FOR SCIENCE AND TECH EVALUATION) 02 October 2018 (2018-10-02)<br>    entire document | 1-28 |

☑ Further documents are listed in the continuation of Box C.        ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 August 2020** | **02 September 2020** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/073118** |

**C.      DOCUMENTS CONSIDERED TO BE RELEVANT**

| Category* | Citation of document, with indication, where appropriate, of the relevant passages | Relevant to claim No. |
| --- | --- | --- |
| A | US 2006184372 A1 (OKADA, Ellie) 17 August 2006 (2006-08-17)<br>     entire document | 1-28 |

Form PCT/ISA/210 (second sheet) (January 2015)

**INTERNATIONAL SEARCH REPORT**
Information on patent family members

| | International application No. |
|---|---|
| | **PCT/CN2020/073118** |

| Patent document cited in search report | | | Publication date (day/month/year) | Patent family member(s) | | | Publication date (day/month/year) |
|---|---|---|---|---|---|---|---|
| CN | 105184078 | A | 23 December 2015 | None | | | |
| CN | 105678659 | A | 15 June 2016 | None | | | |
| CN | 101276345 | A | 01 October 2008 | None | | | |
| CN | 106570616 | A | 19 April 2017 | None | | | |
| CN | 108614867 | A | 02 October 2018 | None | | | |
| US | 2006184372 | A1 | 17 August 2006 | JP | 2004348170 | A | 09 December 2004 |
| | | | | WO | 2004090774 | A1 | 21 October 2004 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105184078 A